(19) Europäisches Patentamt / European Patent Office / Office européen des brevets

(11) **EP 2 458 776 A1**

(12) **DEMANDE DE BREVET EUROPEEN**

(43) Date de publication:
**30.05.2012 Bulletin 2012/22**

(51) Int Cl.:
***H04L 9/06*** *(2006.01)*

(21) Numéro de dépôt: **11306571.8**

(22) Date de dépôt: **28.11.2011**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **30.11.2010 FR 1059936**

(71) Demandeur: **Logiways France
75015 Paris (FR)**

(72) Inventeur: **Adjedj, M. Michaël
94380 BONNEUIL-SUR-MARNE (FR)**

(74) Mandataire: **Jacobson, Claude
Cabinet Lavoix
2, Place d'Estienne d'Orves
75441 Paris Cedex 09 (FR)**

(54) **Procédé et système de protection d'un dispositif de cryptographie**

(57) Ce procédé de protection d'un circuit de cryptographie contre des attaques visant à découvrir une donnée secrète ($D_i$, K) utilisée lors de l'exécution par le circuit d'un algorithme de cryptographie comprenant l'application (22) d'au moins une opération cryptographique ($O_i$) à des données ($D_i$), lesdites données appartenant à une première structure mathématique (E) ayant au moins une structure de groupe et munie d'au moins une loi de composition interne, est caractérisé en ce qu'il comprend une étape ($OP_i$) de protection de ladite opération cryptographique, comprenant l'application (20) auxdites données ($D_i$) d'au moins un premier homomorphisme inversible ($M_i$), compatible avec ladite loi de composition interne, avant l'application (22) de ladite opération cryptographique ($O_i$), et l'application (24) d'au moins un deuxième homomorphisme $\left( M_i^{-1} \right)$, inverse dudit premier homomorphisme ($M_i$), après l'application (22) de ladite opération cryptographique ($O_i$).

EP 2 458 776 A1

**Description**

La présente invention concerne un procédé de protection d'un circuit de cryptographie contre des attaques visant à découvrir une donnée secrète utilisée lors de l'exécution par le circuit d'un algorithme de cryptographie comprenant l'application d'au moins une opération cryptographique à des données, lesdites données appartenant à une première structure mathématique ayant au moins une structure de groupe et munie d'au moins une loi de composition interne.

La cryptographie a pour but de permettre à deux entités de communiquer en toute sécurité en utilisant un canal de communication non sûr, c'est-à-dire susceptible d'être espionné par une troisième entité, appelée par la suite « adversaire ».

A cette fin, la cryptographie permet notamment de protéger la confidentialité d'une information, par le moyen du chiffrement de cette information et de l'opération duale, le déchiffrement, ou de protéger seulement l'authenticité d'une information, par des opérations complémentaires de signature et de vérification des signatures.

Une protection cryptographique d'un message donné est généralement mise en oeuvre par un microcircuit, par application d'une ou plusieurs opérations mathématiques à ce message, opérations qui sont fonctions d'une clé, appelée clé secrète en cryptographie symétrique et publique ou privée en cryptographie asymétrique.

Un tel procédé de protection est cependant susceptible d'être attaqué par un adversaire, cherchant à accéder au contenu du message ou à la clé elle-même.

Un modèle d'adversaire standard, à l'origine de l'emploi de la cryptographie pour protéger les communications, est celui où l'adversaire n'est qu'un observateur, passif et/ou actif, agissant via le canal de transmission. Dans ce modèle, l'adversaire peut accéder à toutes les communications, les interrompre voire les modifier. Des protocoles cryptographiques résistants à ces catégories d'adversaires existent, et sont pour certains très performants.

En raison notamment de l'élargissement des champs d'application de la cryptographie, de nouveaux modèles d'adversaires et attaques sont apparus. Notamment, les dispositifs à microcircuits mettant en oeuvre les algorithmes de cryptographie font parfois l'objet d'attaques visant à déterminer les données secrètes qu'ils manipulent telles que la ou les clés utilisée(s) et éventuellement dans certains cas de l'information sur les messages eux-mêmes.

C'est le cas par exemple des attaques dites par canaux auxiliaires, qui exploitent certaines propriétés des implémentations logicielles ou matérielles des algorithmes de cryptographie.

Notamment, certains types d'attaques exploitent le fait que chaque opération mathématique d'un calcul cryptographique possède une signature énergétique différente d'une autre. Par exemple, la consommation énergétique générée par le passage d'un bit d'information de la valeur '1' à la valeur '0' est différente de celle générée par le passage d'un bit de '0' à '1'.

Ainsi, les attaques de type SPA (de l'anglais « Simple Power Analysis », c'est-à-dire analyse de puissance simple) ou DPA (de l'anglais «Differential Power Analysis », c'est-à-dire analyse de puissance différentielle) consistent à mesurer la consommation électrique engendrée par un calcul cryptographique, par exemple les courants et tensions entrants et sortants dans le microcircuit au cours de l'exécution de l'algorithme de cryptographie, et à déduire de ces courants ou tensions la suite des opérations réalisées, voire la clé utilisée.

Par ailleurs, la mesure du champ électromagnétique engendré par le courant électrique lors d'un calcul cryptographique peut donner lieu à des attaques électromagnétiques de type EMA (de l'anglais « ElectroMagnetic Attack »), identiques dans leur principe aux attaques portant sur la consommation électrique.

En outre, les attaques de type «attaque temporelle » permettent de retrouver la ou les clé(s) utilisée(s) lors d'un calcul cryptographique à partir de simples mesures de temps d'exécution, c'est-à-dire à partir de l'analyse de la durée des opérations mathématiques du calcul, durée qui peut dépendre des valeurs des données.

Ces nouveaux types d'attaques, basés sur une simple observation passive des calculs cryptographiques, peuvent être mis en oeuvre pour accéder frauduleusement par exemple aux services de télévision à péage. De tels services utilisent des algorithmes de chiffrement et de déchiffrement pour transmettre de façon sûre des contenus audio-visuels aux abonnés, munis de décodeurs aptes à déchiffrer, au moyen d'une clé, les contenus chiffrés. La consommation électrique de ces décodeurs peut ainsi être surveillée et analysée pour accéder à cette clé, et ainsi fournir à l'attaquant la capacité de déchiffrer les contenus audio-visuels de manière frauduleuse.

En outre, un autre type d'adversaire, ayant accès au circuit de cryptographie, est également envisageable. Ce type d'adversaire aurait en particulier accès au registre mémoire à tout instant, et pourrait suivre les accès aux différentes variables à tout moment, et observer les opérations effectuées. On parle alors de cryptographie en « boîte blanche ».

Le but de l'invention est donc de prévoir un procédé de protection cryptographique offrant une résistance accrue aux attaques du type précité.

A cette fin, l'invention a pour objet un procédé de protection du type précité, caractérisé en ce qu'il comprend une étape de protection de ladite opération cryptographique, comprenant :

- l'application auxdites données d'au moins un premier homomorphisme inversible, compatible avec ladite loi de composition interne, avant l'application de ladite opération cryptographique, et

- l'application d'au moins un deuxième homomorphisme, inverse dudit premier homomorphisme, après l'application de ladite opération cryptographique.

Le procédé selon l'invention comporte également les caractéristiques suivantes, prises séparément ou en combinaison :

- ladite opération cryptographique est appliquée au résultat dudit premier homomorphisme,
- ledit deuxième homomorphisme est appliqué au résultat de ladite opération cryptographique,
- ledit deuxième homomorphisme est appliqué après l'application d'au moins deux opérations cryptographiques au résultat dudit premier homomorphisme,
- ledit algorithme de cryptographie comprend l'application d'au moins deux opérations cryptographiques à des données, et au moins un homomorphisme inversible est appliqué avant au moins deux desdites opérations cryptographiques,
- au moins deux homomorphismes distincts sont appliqués auxdites données,
- ledit homomorphisme est une application de ladite première structure mathématique vers une deuxième structure mathématique distincte de ladite première structure, munie d'au moins une loi de composition interne différente de ladite au moins une loi de composition interne de ladite première structure,
- ledit homomorphisme est un chiffrement homomorphe,
- ladite opération cryptographique est appliquée au moyen d'une table de correspondance indiquant le résultat de ladite opération en fonction de la variable d'entrée de cette opération,
- ledit homomorphisme et ladite opération cryptographique sont appliqués au moyen d'une unique table de correspondance indiquant le résultat de la composition d'au moins ledit homomorphisme et ladite opération en fonction de la variable d'entrée dudit homomorphisme.

L'invention a également pour objet un dispositif de protection d'un circuit de cryptographie contre des attaques visant à découvrir une donnée secrète utilisée lors de l'exécution par ledit circuit d'un algorithme de cryptographie comprenant l'application d'au moins une opération cryptographique à des données, lesdites données appartenant à une première structure mathématique ayant au moins une structure de groupe et munie d'au moins une loi de composition interne, caractérisé en ce qu'il comprend des moyens pour appliquer auxdites données au moins un premier homomorphisme inversible, compatible avec ladite loi de composition interne, avant l'application de ladite opération cryptographique, et au moins un deuxième homomorphisme, inverse dudit premier homomorphisme, après l'application de ladite opération cryptographique.

L'invention sera mieux comprise à l'aide de la description qui va suivre, donnée uniquement à titre d'exemple, et faite en se référant aux dessins annexés, sur lesquels :

- la figure 1 représente de façon schématique la structure d'un dispositif de protection selon un mode de réalisation de l'invention,
- la figure 2 est un schéma synoptique illustrant les étapes successives du procédé de protection selon un mode de réalisation de l'invention,
- la figure 3 illustre de manière détaillée une étape du procédé de protection représenté sur la figure 2,
- la figure 4 est un schéma synoptique illustrant les étapes successives du procédé de protection selon un autre mode de réalisation de l'invention, et
- la figure 5 est un schéma synoptique illustrant des étapes successives du procédé de protection selon un autre mode de réalisation de l'invention.

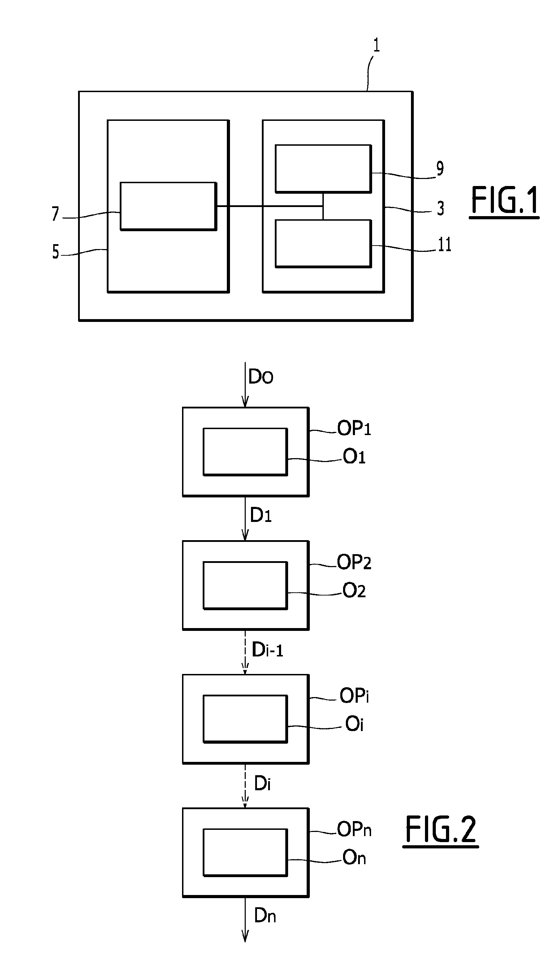

On a représenté sur la figure 1, un dispositif 1 de protection selon un mode de réalisation de l'invention.

Le dispositif 1 comprend un processeur 3 et une mémoire 5, reliés de manière à pouvoir échanger des données telles qu'une clé de sécurité ou des données.

La mémoire 5 est propre à stocker des données, et comprend un espace 7 de mémoire sécurisé, apte à stocker de manière sécurisée notamment la ou les clés de sécurité et/ou les données à chiffrer ou à déchiffrer, au moins temporairement.

Le processeur 3 comprend une application algorithmique 9 de cryptographie, apte à appliquer un algorithme de cryptographie tel qu'un chiffrement ou un déchiffrement à des données à protéger ou protégées, et des moyens 11 de protection de l'application algorithmique 9.

Le microprocesseur 3 est ainsi apte à appliquer un algorithme de cryptographie sur un message et à mettre en oeuvre un procédé de protection de cet algorithme de manière à empêcher la détection par un adversaire de la clé et/ou des données.

On a représenté sur la figure 2, les principales étapes du procédé de protection selon un mode de réalisation de l'invention, mis en oeuvre par le dispositif 1 de protection tel que représenté sur la figure 1 lors de l'exécution d'un algorithme de cryptographie sur des données nécessitant une protection cryptographique, faisant intervenir une clé de sécurité.

On considèrera par la suite que cet algorithme de cryptographie est un chiffrement, mais le procédé de protection décrit en référence aux figures 2 à 5 pourrait être indifféremment appliqué à des opérations de déchiffrement ou tout type d'algorithme de protection cryptographique.

L'exécution de cet algorithme de cryptographie comprend la mise en oeuvre d'une pluralité d'opérations mathématiques $O_i$, appelées également opérations cryptographiques, appliquées successivement aux données initiales puis aux données obtenues à la suite de chacune de ces opérations. Dans la suite de la description, on notera $D_o$ les données initiales, $D_i$ les données obtenues après une opération $O_i$, et $D_n$ les données obtenues à l'issue de l'algorithme de cryptographie.

Les opérations $O_i$, qui dépendent de la clé de sécurité, notée K, sont par exemple choisies parmi des opérations de base comme l'addition, la soustraction, la multiplication et la division, toute opération dérivée de ces opérations de base, telles que l'exponentiation ou l'évaluation par un polynôme, ou encore des opérations binaires telles que le « ou exclusif » XOR ou la fonction « et » AND.

Chacune de ces opérations $O_i$ est protégée d'attaques éventuelles par le procédé selon l'invention. Le chiffrement des données $D_o$ comprend ainsi plus généralement la mise en oeuvre d'une pluralité d'opérations mathématiques protégées $OP_i$ dont les résultats sont identiques aux résultats des opérations $O_i$, mais qui sont protégées contre des attaques telles que des attaques par canaux auxiliaires.

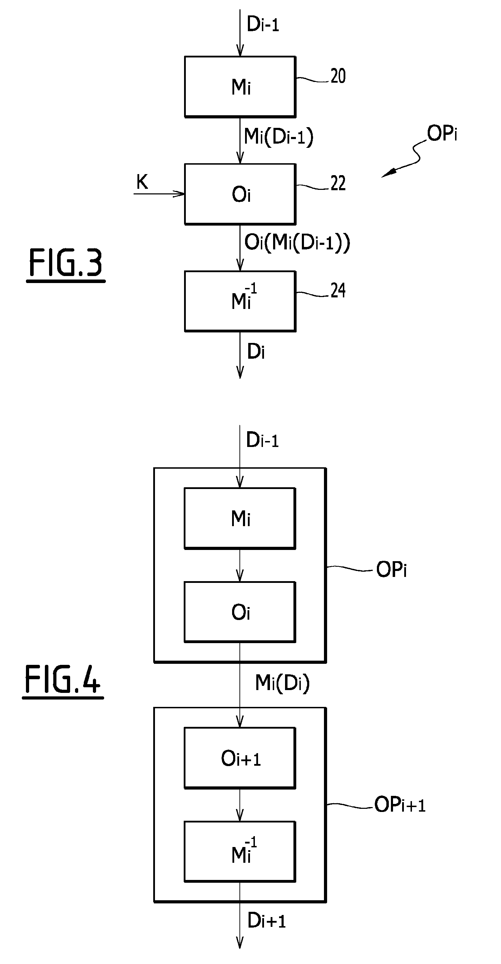

Les étapes mises en oeuvre lors de chaque opération protégée $OP_i$ sont détaillées sur la figure 3.

La protection de chaque opération mathématique, et plus généralement de l'ensemble de l'algorithme de cryptographie, repose sur l'application aux données, avantageusement avant chaque opération, d'un premier morphisme de groupes, ou homomorphisme, réversible et choisi de manière aléatoire, et sur l'application, avantageusement après chaque opération, d'un homomorphisme inverse du premier homomorphisme.

Ainsi, la mise en oeuvre d'une opération protégée $OP_i$ comprend une étape 20 d'application d'un premier homomorphisme, noté $M_i$, aux données $D_o$ initiales ou aux données $D_{i-1}$ issues de l'opération protégée $OP_{i-1}$. Puis, lors d'une étape 22, l'opération $O_i$, qui dépend de la clé K, est appliquée au résultat $M_i(D_{i-1})$ obtenu à l'issue de l'étape 20.

Enfin, lors d'une étape 24, un second homomorphisme, noté $M_i^{-1}$, , inverse du premier morphisme $M_i$, est appliqué au résultat de l'opération $O_i$.

Un groupe est une structure algébrique définie comme un ensemble E d'éléments, munie d'au moins une loi de composition interne, notée généralement additivement ($+_E$) ou multiplicativement ($X_E$). Tous les éléments du groupe possèdent un inverse pour la loi de composition interne. Par ailleurs, l'ensemble comprend un élément neutre noté $0_E$ lorsque la loi est notée additivement, ou $1_E$ lorsque la loi est notée multiplicativement.

Un ensemble est un anneau s'il possède deux lois de composition interne, généralement notées $+_E$ et $X_E$ respectivement, telles que $(E, +_E)$ est un groupe.

De plus, si tous les éléments, excepté l'élément nul, sont inversibles pour la loi multiplicative, l'anneau E est un corps.

Un morphisme de groupes entre deux groupes E et F, éventuellement égaux, est défini comme une application $\varphi$ compatible avec la loi de ces groupes, c'est-à-dire telle que pour tout $x,y \in E$, $\varphi(x +_E y) = \varphi(x) +_F \varphi(y)$ et $\varphi(0_E) = 0_F$, où $+_E$ et $+_F$ désignent la loi de composition interne des groupes E et F respectivement, et $O_E$ et $O_F$ leur élément neutre.

En outre, si un morphisme $\varphi$ est bijectif, il est inversible. Ainsi, en notant $\varphi^{-1}$ son inverse, pour tout élément x de l'ensemble E : $\varphi^{-1}(\varphi(x)) = \varphi(\varphi^{-1}(x)) = x$.

Par ailleurs, un morphisme de groupes est un morphisme d'anneaux s'il s'agit d'une application $\varphi$ définie entre deux anneaux E et F, et compatible avec les lois de ces anneaux, c'est-à-dire telle que :

$$- \text{ pour tout } x,y \in E, \varphi(x +_E y) = \varphi(x) +_F \varphi(y) \tag{1}$$

$$- \text{ pour tout } x,y \in E, \varphi(x \times_E y) = \varphi(x) \times_F \varphi(y) \tag{2}$$

$$- \quad \varphi(0_E) = 0_F \ \text{et} \ \varphi(1_E) = 1_F$$

Un morphisme d'anneaux conserve donc toutes les opérations usuelles, telles que l'addition et la multiplication, mais également leurs opérations dérivées comme l'exponentiation ou la composition par un polynôme, ou bien leurs opérations inverses (soustraction ou inversion des éléments inversibles).

Dans la suite de la description et des revendications, on désignera sous l'appellation générale « homomorphisme » toute application d'un ensemble E vers un ensemble F, éventuellement identiques, ayant au moins une structure de groupe, cette application conservant au moins une loi de composition interne de ces ensembles.

Bien entendu, cette appellation inclut également tout morphisme possédant, outre les propriétés d'un morphisme de groupes, des propriétés supplémentaires, et notamment les morphismes d'anneaux, les morphismes d'algèbres ou les morphismes de corps. Par exemple, un morphisme d'algèbres conserve, outre les deux lois de composition interne, une loi dite externe, par exemple la multiplication par un élément d'un corps différent de l'algèbre en question.

Ainsi, si l'on considère que les données $D_i$ sont des éléments d'un anneau E muni d'une addition et d'une multiplication, et que le morphisme $M_i$ appliqué aux données $D_i$ lors de l'étape 20 est un morphisme inversible tel que défini précédemment, par exemple un endomorphisme, et dont l'inverse est le morphisme $M_i^{-1}$ appliqué lors de l'étape 24, les données $D_{i+1}$ obtenues à l'issue de l'étape 24 vérifient l'égalité suivante :

$$D_i = M_i^{-1}\left(O_i\left(M_i\left(D_{i-1}\right)\right)\right) = O_i\left(D_{i-1}\right)$$

En effet, puisque l'opération $O_i$ est une opération de base de l'anneau E, ou une opération dérivée des opérations de base de l'anneau E, cette opération $O_i$ est conservée par les morphismes $M_i$ et $M_i^{-1}$. En particulier, puisque le morphisme $M_i$ conserve la loi additive et la loi multiplicative de l'anneau E, toutes les opérations qui dérivent de ces deux lois, donc toutes les opérations $O_i$, sont également conservées.

Par conséquent, les données $D_i$, obtenues à l'issue de l'étape 24 sont identiques aux données qui auraient été obtenues par seule application de l'opération $O_i$ aux données $D_{i-1}$.

Cependant, en raison du caractère aléatoire du morphisme d'anneaux appliqué, les bits des variables d'entrée sont modifiés de façon aléatoire. La signature énergétique (électrique et/ou thermique et/ou électromagnétique) de l'opération protégée $OP_i$ ainsi que sa durée d'exécution sont donc aléatoires, contrairement à celles de l'opération $O_i$, ce qui rend toute analyse de la consommation ou des émissions énergétiques, ou encore des temps d'exécution, inopérante.

L'application d'un morphisme aux données $D_{i-1}$ avant chaque opération mathématique $O_i$ et du morphisme inverse après cette opération permet ainsi de masquer la signature énergétique des opérations $O_i$ appliquées successivement aux données à chiffrer, donc protéger le chiffrement de ces données d'attaques telles que des attaques par canaux auxiliaires, sans modifier le résultat final $D_n$ de l'algorithme de cryptographie, c'est-à-dire les données chiffrées.

Avantageusement, le morphisme $M_i$ et son inverse $M_i^{-1}$ utilisés lors des différentes opérations protégées $OP_i$ sont différents les uns des autres, et sont choisis de manière aléatoire. Ainsi, la signature énergétique des morphismes $M_i$ ne peut être analysée. De plus, les morphismes $M_i$ utilisés sont avantageusement modifiés à chaque exécution de l'algorithme de cryptographie, de telle sorte que la signature énergétique de cet algorithme soit différente à chaque exécution, empêchant toute analyse statistique de cette signature.

Chaque morphisme $M_i$ est alors choisi de manière aléatoire avant l'exécution de l'opération $O_i$, par exemple par tirage aléatoire de ce morphisme dans une base de données de morphismes préétablie, ou par détermination de nouveaux morphismes au fur et à mesure de l'exécution de l'algorithme.

Les morphismes $M_i$ sont par exemple des morphismes de Frobenius, définis sur l'anneau E de caractéristique p>0 par :

$$Frob_E : x \rightarrow x^p,$$

ou tout morphisme dérivé du morphisme de Frobenius.

L'anneau E est alors par exemple une extension d'un corps de Galois de degré k ≥ 2 , noté GF(p$^k$). Un corps de Galois, noté GF(p), est défini par l'ensemble des entiers modulo p, noté également Z / pZ, p étant un nombre premier. Sur un tel corps, X$^P$=X.

Alternativement, les morphismes d'anneaux M$_i$ peuvent être des chiffrements homomorphes, c'est-à-dire des opérations de chiffrements possédant les mêmes propriétés qu'un morphisme, et dépendant d'une clé Ks.

Ces chiffrements homomorphes sont avantageusement des chiffrements totalement homomorphes, tels que définis dans « Fully Homomorphic Encryption Using Ideal Lattices », Gentry C., STOC 2009, 169-178. De tels morphismes possèdent des propriétés algébriques sensiblement identiques aux morphismes de corps, et pouvant être ainsi considérés comme des morphismes d'anneaux. Notamment, de tels morphismes conservent entièrement la structure de l'ensemble, anneau ou corps, de départ, et en particulier la loi additive XOR et la loi multiplicative AND, et sont inversibles.

De tels morphismes peuvent ainsi être utilisés lorsque les opérations O$_i$ exécutées lors de l'algorithme de cryptographie sont des opérations binaires, par exemple des opérations XOR, AND, ou des opérations dérivées de celles-ci.

En outre, des chiffrements homomorphes conservant d'autres types d'opérations (par exemple l'addition et/ou la multiplication) pourraient également être utilisés.

Un chiffrement homomorphe présente en outre l'avantage de dépendre d'une clé Ks, appelée par la suite clé secondaire car les données chiffrées obtenues à l'issue de l'algorithme de cryptographie ne dépendent pas de cette clé. Un chiffrement homomorphe peut donc s'écrire comme une fonction $C(D_i,K_s)$, ou, à clé fixée, comme une fonction $f(D_i)$ possédant les propriétés d'homomorphisme décrites précédemment.

Par conséquent, une même fonction C de chiffrement homomorphe peut engendrer un très grand nombre de morphismes inversibles f différents (de l'ordre de 10$^{300}$), par modification de la seule clé Ks. En pratique, un nombre de clés différentes de l'ordre de 10$^{40}$ peut s'avérer suffisant.

Ainsi, les morphismes M$_i$ (et leurs inverses) utilisés pour protéger les opérations successives d'un algorithme de cryptographie peuvent être choisis de manière aléatoire en choisissant un même chiffrement C pour toutes les opérations protégées OP$_i$, mais en choisissant aléatoirement la clé Ks de ce chiffrement avant chacune de ces opérations.

Alternativement, les morphismes M$_i$ peuvent être des chiffrements simplement homomorphes, ne conservant pas la loi additive et la loi multiplicative mais une seule de ces lois. Il peut par exemple s'agir du chiffrement RSA (Rivest Shamir Adleman), qui conserve uniquement la multiplication. De tels morphismes M$_i$ peuvent ainsi être utilisés lorsque les opérations O$_i$ ne font intervenir qu'un seul type d'opération de base, par exemple la seule addition ou la seule multiplication.

Il devra toutefois être compris que l'exemple de réalisation présenté ci-dessus n'est pas limitatif.

Notamment, selon un autre mode de réalisation, illustré sur la figure 4, le morphisme inverse $M_i^{-1}$ n'est pas appliqué immédiatement après l'opération O$_i$, mais après plusieurs opérations O$_i$, O$_{i+1}$ ... consécutives. Ainsi, dans le mode de réalisation illustré sur la figure 4, l'une des opérations protégées OP$_i$ comprend l'application d'un homomorphisme M$_i$ aux données D$_{i-1}$, suivie de l'application de l'opération O$_i$. Cette opération protégée OP$_i$ est elle-même directement suivie de l'application de l'opération O$_{i+1}$, puis du morphisme inverse $M_i^{-1}$. L'opération O$_{i+1}$, est ainsi appliquée à l'image des données D$_i$ par le morphisme M$_i$.

En outre, plusieurs morphismes peuvent être appliqués aux données avant chaque opération O$_i$, les morphismes inverses étant alors appliqués successivement après chaque opération O$_i$, de manière à offrir une meilleure résistance aux attaques.

Par ailleurs, les morphismes utilisés ne sont pas nécessairement des endomorphismes, et peuvent être des applications d'un premier anneau E vers un deuxième anneau F dont les lois additive et multiplicative sont avantageusement différentes des lois additive et multiplicative du premier anneau E. De tels morphismes présentent l'avantage de transposer les opérations O$_i$ dans un espace algébrique F différent de l'espace algébrique E des données D$_i$, ce qui augmente encore la protection de l'algorithme de cryptographie. En effet, dans ce mode de réalisation, un attaquant ne peut pas accéder à l'ensemble mathématique dans lequel les opérations sont effectuées, même à l'aide de statistiques poussées sur les signatures énergétiques des calculs.

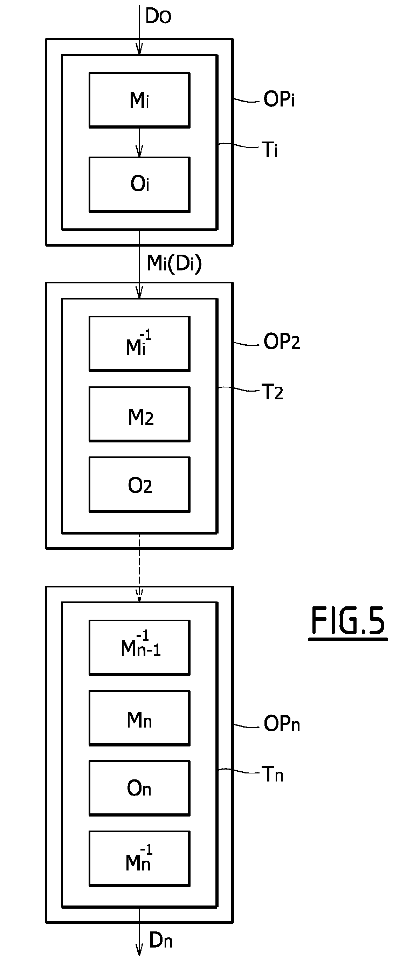

Selon un mode de réalisation particulier, les opérations O$_i$ et/ou les morphismes M$_i$ et $M_i^{-1}$ ne sont pas réalisées au moyen de calculs, mais par l'intermédiaire de tables de correspondance, permettant d'accéder sans calcul au résultat d'une opération à partir des valeurs des variables d'entrée (les données D$_i$ par exemple). La figure 5 illustre ainsi deux opérations protégées successives effectuées au cours de l'exécution d'un algorithme de cryptographie selon ce mode de réalisation.

Lors d'une première opération protégée $OP_1$, le processeur 3 applique aux données $D_0$ le morphisme $M_1$ et l'opération $O_1$, sans calcul, mais en accédant à une table $T_1$ de correspondance correspondant à l'opération $O_1 \circ M_1$, stockée dans la mémoire protégée 7. Ainsi, lors de cette opération $OP_1$, le processeur 3 recherche l'image $O_1 \circ M_1 (D_0)$ des données d'entrée $D_1$ par la combinaison du morphisme $M_1$ et de l'opération $O_1$.

Puis, lors de l'étape protégée suivante $OP_2$, le processeur applique aux données $M_1(D_1)$ issues de l'étape $OP_1$ le morphisme inverse $M_1^{-1}$, suivi du morphisme $M_2$, et de l'opération $O_2$, au moyen d'une unique table $T_2$ de correspondance correspondant à l'opération $O_2 \circ M_2 \circ M_1^{-1}$, stockée dans la mémoire protégée 7.

Les étapes $OP_i$ suivantes sont réalisées selon le même principe. Cependant, le morphisme inverse $M_n^{-1}$ est appliqué aux données lors de la dernière étape $OP_n$, de manière à obtenir à l'issue des n étapes $OP_1$, $OP_2$,...$OP_n$ les mêmes données chiffrées que celles qui auraient étaient obtenues par application des seules opérations $O_1$, ...$O_n$.

Avantageusement, les morphismes $M_i$ et $M_i^{-1}$ sont des applications d'un premier anneau E vers un deuxième anneau F différent de E, et transposant l'opération $O_i$ dans un espace algébrique différent de l'espace algébrique E des données $D_{i-1}$. Une telle transposition a pour effet d'empêcher un éventuel attaquant de déterminer une relation linéaire entre les données d'entrée et les données de sortie des opérations OPi, et d'en déduire les opérations $O_i$ effectuées.

L'utilisation de telles tables de correspondance est ainsi particulièrement avantageuse pour protéger les algorithmes de cryptographie lorsque les attaquants ont la possibilité de suivre les calculs effectués pas à pas, le procédé de protection selon l'invention permettant donc d'améliorer la sécurité de systèmes de cryptographie en boîte blanche.

On notera que lorsque l'algorithme de cryptographie comprend plusieurs opérations mathématiques $O_i$, celles-ci ne sont pas nécessairement toutes protégées par l'application d'un morphisme inversible.

## Revendications

1. Procédé de protection d'un circuit de cryptographie contre des attaques visant à découvrir une donnée secrète ($D_i$, K) utilisée lors de l'exécution par le circuit d'un algorithme de cryptographie comprenant l'application (22) d'au moins une opération cryptographique ($O_i$) à des données ($D_i$), lesdites données appartenant à une première structure mathématique (E) ayant au moins une structure de groupe et munie d'au moins une loi de composition interne ($+_E$, $X_E$), **caractérisé en ce qu'**il comprend une étape ($OP_i$) de protection de ladite opération cryptographique, comprenant :

   - l'application (20) auxdites données ($D_i$) d'au moins un premier homomorphisme inversible ($M_i$), compatible avec ladite loi de composition interne ($+_E$, $X_E$), avant l'application (22) de ladite opération cryptographique ($O_i$), et
   - l'application (24) d'au moins un deuxième homomorphisme($M^{-1}_i$), inverse dudit premier homomorphisme ($M_i$), après l'application (22) de ladite opération cryptographique ($O_i$).

2. Procédé de protection selon la revendication 1, **caractérisé en ce que** ladite opération cryptographique ($O_i$) est appliquée au résultat ($M_i(D_i)$) dudit premier homomorphisme ($M_i$).

3. Procédé de protection selon l'une des revendications 1 ou 2, **caractérisé en ce que** ledit deuxième homomorphisme $\left(M_i^{-1}\right)$ est appliqué au résultat ($O_i(M_i(D_i))$) de ladite opération cryptographique ($O_i$),

4. Procédé de protection selon l'une des revendications 1 ou 2, **caractérisé en ce que** ledit deuxième homomorphisme $\left(M_i^{-1}\right)$ est appliqué après l'application d'au moins deux opérations cryptographiques ($O_i$) au résultat($M_i(D_i)$) dudit premier homomorphisme.

5. Procédé de protection selon l'une quelconque des revendications précédentes, dans lequel ledit algorithme de cryptographie comprend l'application d'au moins deux opérations cryptographiques ($O_i$) à des données ($D_i$), **caractérisé en ce qu'**au moins un homomorphisme inversible ($M_i$) est appliqué avant au moins deux desdites opérations cryptographiques ($O_i$).

**6.** Procédé de protection selon la revendication 5, **caractérisé en ce qu'**au moins deux homomorphismes distincts sont appliqués successivement auxdites données ($D_i$).

**7.** Procédé de protection selon l'une quelconque des revendications précédentes, **caractérisé en ce que** ledit homomorphisme est une application de ladite première structure mathématique (E) vers une deuxième structure mathématique (F) distincte de ladite première structure (E), munie d'au moins une loi de composition interne ($+_F$, $x_F$) différente de ladite au moins une loi de composition interne ($+_E$, $X_E$) de ladite première structure (E).

**8.** Procédé de protection selon l'une quelconque des revendications précédentes, **caractérisé en ce que** ledit homomorphisme ($M_i$) est un chiffrement homomorphe.

**9.** Procédé de protection selon l'une quelconque des revendications précédentes, **caractérisé en ce que** ladite opération cryptographique ($O_i$) est appliquée au moyen d'une table ($T_1$, $T_2$, $T_n$) de correspondance indiquant le résultat de ladite opération ($O_i$) en fonction de la variable d'entrée de cette opération.

**10.** Procédé de protection selon la revendication 9, **caractérisé en ce que** ledit homomorphisme ($M_i$) et ladite opération cryptographique ($O_i$) sont appliqués au moyen d'une unique table ($T_1$) de correspondance indiquant le résultat de la composition d'au moins ledit homomorphisme et ladite opération ($O_i$) en fonction de la variable d'entrée dudit homomorphisme.

**11.** Dispositif (1) de protection d'un circuit de cryptographie contre des attaques visant à découvrir une donnée secrète ($D_i$, K) utilisée lors de l'exécution par ledit circuit d'un algorithme de cryptographie comprenant l'application d'au moins une opération cryptographique ($O_i$) à des données ($D_i$), lesdites données appartenant à une première structure mathématique (E) ayant au moins une structure de groupe et munie d'au moins une loi de composition interne ($+_E$, $X_E$), **caractérisé en ce qu'**il comprend des moyens pour appliquer auxdites données ($D_i$) au moins un premier homomorphisme inversible ($M_i$), compatible avec ladite loi de composition interne ($+_E$, $X_E$), avant l'application de ladite opération cryptographique ($O_i$), et au moins un deuxième homomorphisme $\left(M_i^{-1}\right)$, inverse dudit premier homomorphisme, après l'application de ladite opération cryptographique ($O_i$).

FIG.1

FIG.2

$D_{i-1}$

Mi — 20

$M_i(D_{i-1})$

K → Oi — 22    OPi

$O_i(M_i(D_{i-1}))$

$M_i^{-1}$ — 24

$D_i$

## FIG.3

$D_{i-1}$

Mi

Oi — OPi

$M_i(D_i)$

Oi+1

$M_i^{-1}$ — OPi+1

$D_{i+1}$

## FIG.4

$D_0$

$M_i$

$O_i$

OPi

Ti

$M_i(D_i)$

$M_i^{-1}$

$M_2$

$O_2$

OP2

T2

$M_{n-1}^{-1}$

$M_n$

$O_n$

$M_n^{-1}$

OPn

Tn

$D_n$

## FIG.5

Europäisches
Patentamt

European
Patent Office

Office européen
des brevets

## RAPPORT DE RECHERCHE EUROPEENNE

Numéro de la demande

EP 11 30 6571

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2009/180611 A1 (DOUGUET MICHEL [FR] ET AL) 16 juillet 2009 (2009-07-16) | 1-8,10, 11 | INV. H04L9/06 |
| Y | * pages 1-6; figures 2, 3a * | 9 | |
| X | NIGEL P SMART: "An Analysis of Goubin's Refined Power Analysis Attack", CHES 2003, vol. 2779, 23 septembre 2003 (2003-09-23), pages 281-290, XP055005050, | 1-8,10, 11 | |
| Y | * abrégé * <br> * section 4 et 5 * | 9 | |
| Y | CHOW S ET AL: "A white-box DES implementation for DRM applications", 20030101; 20030000, 1 janvier 2003 (2003-01-01), pages 1-15, XP002462504, | 9 | |
| A | * abrégé * <br> * sections 3 et 5.3 * | 1-8,10, 11 | |

DOMAINES TECHNIQUES
RECHERCHES (IPC)

H04L

Le présent rapport a été établi pour toutes les revendications

| Lieu de la recherche | Date d'achèvement de la recherche | Examinateur |
|---|---|---|
| Munich | 14 mars 2012 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 30 6571

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-03-2012

| Document brevet cité au rapport de recherche | Date de publication | Membre(s) de la famille de brevet(s) | Date de publication |
|---|---|---|---|
| US 2009180611  A1 | 16-07-2009 | DE 112009000154 T5 | 25-11-2010 |
|  |  | TW    200939115 A | 16-09-2009 |
|  |  | US   2009180611 A1 | 16-07-2009 |
|  |  | WO   2009091746 A1 | 23-07-2009 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GENTRY C.** Fully Homomorphic Encryption Using Ideal Lattices. *STOC,* 2009, 169-178